Europäisches Patentamt

European Patent Office

Office européen des brevets

(19)

(11) Veröffentlichungsnummer: **0 292 823 B1**

(12) **EUROPÄISCHE PATENTSCHRIFT**

(45) Veröffentlichungstag der Patentschrift: 21.08.91

(51) Int. Cl.5: **B01D 53/34**

(21) Anmeldenummer: 88107803.4

(22) Anmeldetag: 16.05.88

(54) **Verfahren zur NO-Rückgewinnung aus dem bei der Ammoniumnitritherstellung anfallenden Abgas.**

(30) Priorität: 27.05.87 DE 3717835

(43) Veröffentlichungstag der Anmeldung:
30.11.88 Patentblatt 88/48

(45) Bekanntmachung des Hinweises auf die
Patenterteilung:
21.08.91 Patentblatt 91/34

(84) Benannte Vertragsstaaten:
BE DE ES FR GB IT NL

(56) Entgegenhaltungen:
EP-A- 0 174 907
DE-B- 2 015 156

(73) Patentinhaber: BAYER ANTWERPEN N.V.
Kanaaldok B 1 Kruisschans
B-2040 Antwerpen 4(BE)

(72) Erfinder: Van Royen, Luc, Dr.
Berkenlaan 138
B-2091 Stabroek(BE)
Erfinder: Putseys, Roland, Dr.
Sparrendreef 3
B-2180 Heide-Kalmthout(BE)
Erfinder: Van Herck, Willy, IR.
Jacobuslei 108
B-2130 Brasschaat(BE)
Erfinder: Sluyts, Domien
Elzenlaan 4
B-2091 Stabroek(BE)
Erfinder: Pype, Robert
Laar 231
B-2070 Ekeren(BE)

(74) Vertreter: Steiling, Lothar, Dr. et al
c/o Bayer AG Konzernverwaltung RP Patente
Konzern
W-5090 Leverkusen 1 Bayerwerk(DE)

**Beschreibung**

Die vorliegende Erfindung betrifft ein Verfahren zur vollständigen NO-Rückgewinnung aus dem Abgas der Ammoniumnitritherstellung, bei der nitrosehaltige Gase in einer ersten Stufe in einer Ammoniumcarbonat-und/oder Ammoniumbicarbonatlösung unter Bildung von Ammoniumnitritlösungen absorbiert werden, das entstehende Kohlendioxid enthaltende Abgas in einer zweiten Stufe in einer ammoniakalischen Lösung unter Bildung von Ammoniumcarbonat und/oder Ammoniumbicarbonat absorbiert und als solches in die erste Absorptionsstufe zurückgeführt wird bzw. werden.

Es ist bekannt, den $NO_x$-Gehalt aus Abgasen mittels speziell dafür geeigneten Katalysatoren unter Zuführung von Ammoniak zu entfernen. Dabei wird das $NO_x$-haltige Abgas in Stickstoff umgewandelt. Das enthaltene $NO_x$ wird somit in einen inerten Stoff umgewandelt.

Bei der Hydroxylaminherstellung, bei der nitrose Gase aus der Verbrennung von Ammoniak in einem der mehreren nacheinander geschalteten Absorptionstürmen in einer Ammoniumcarbonat- und/oder Ammoniumbicarbonatlösung unter Bildung von Ammoniumnitrit absorbiert werden, wird ein Abgas erhalten, das sowohl Kohlendioxid als einen restlichen Gehalt an nicht-absorbierbarem Stickoxid enthält.

In der DE-A-2 015 156 wird ein Verfahren beschrieben zur Rückgewinnung dieses Kohlendioxidgehaltes, wobei das Kohlendioxid entfernt wird durch Absorption in einem nachgeschalteten Absorptionsturm mittels einer wäßrigen ammoniakalischen Lösung unter Bildung einer ammoniumcarbonat- und/oder ammoniumbicarbonathaltenden wäßrigen Lösung. Diese Lösung wird anschließend in die Absorptionsstufe zurückgeführt zur Bildung von ammoniumnitrithaltigen Lösungen, womit der Kreis geschlossen ist.

Der NO-Gehalt in dem kohlendioxidhaltigen Abgas wird jedoch nicht in den wäßrigen ammoniakalischen Lösungen absorbiert und kann also unverändert den nachgeschalteten Absorptionsturm verlassen.

Aus der EP-A-0 174 907 ist ein Verfahren bekannt, bei dem sowohl Stickoxid als Schwefeldioxid aus Abgasen entfernt werden können. Dabei wird in einer sogenannten Denitrierungszone dem Abgas eine Salpetersäurelösung zugegeben. Dadurch wird das $NO/NO_2$-Verhältnis so eingestellt, daß eine recht einfache Aufkonzentrierung des gebildeten Distickstofftrioxides als Nitrosylschwefelsäure in mehreren nacheinander geschalteten Schwefelsäure-Absorptionsstufen möglich wird. In einem separaten Verfahrensschritt wird unter Zugabe von Luft und bei erhöhter Temperatur eine verdünnte Salpetersäure und eine nitrosefreie Schwefelsäure hergestellt, die wieder in der Denitrierungszone und in den Schwefelsäure-Absorptionsstufen eingesetzt werden. Bei diesem Verfahren werden wegen der Aufkonzentrierung des Distickstofftrioxids als Nitrosylschwefelsäure etwa 7 bis 8 Absorptionstürme benötigt, was technisch einen großen Aufwand bedeutet.

In der DD-A-212 495 wird ein Verfahren beschrieben zur Entfernung von Stickoxiden aus Abgasen durch nacheinander geschaltete Wäschen mit Wasser und verdünnter Salpetersäure, kombiniert mit einer Absorption in konzentrierter Schwefelsäure. Dieses Verfahren entspricht prinzipiell dem oben beschriebenen, jedoch in einer modifizierten Fahrweise.

Obwohl nach den beschriebenen Verfahren eine wesentliche Entfernung von $NO_x$ aus Abgasen realisiert werden kann, ist eine direkte Verwertung des $NO_x$-Gehaltes des Abgases ohne zwischengeschaltete Aufarbeitungsstufen zur Rückgewinnung von drei-, vier- oder fünfwertigen Stickoxiden nicht möglich.

Aufgabe dieser vorliegenden Erfindung ist es somit, ein Verfahren zur Verfügung zu stellen, welches die Nachteile der obenbeschriebenen Verfahren nicht aufweist und eine Rückgewinnung des NO ermöglicht.

Überraschenderweise wurde nun gefunden, daß auf einfache Weise eine nahezu quantitative Rückgewinnung des NO-Gehaltes bei der Herstellung von Ammoniumnitrit erreicht wird, wenn das NO-haltige Abgas mit einer salpetersäurehaltigen Schwefelsäurelösung in Kontakt gebracht und damit die chemische Konsistenz des neugebildeten Abgases auf solche Weise geändert wird, daß dieses Abgas ohne zwischengeschaltete Aufarbeitungsstufen in der bestehenden Hydroxylaminanlage verarbeitet werden kann.

Gegenstand der vorliegenden Erfindung ist somit ein Verfahren zur vollständigen NO-Rückgewinnung aus dem Abgas der Ammoniumnitritherstellung, bei dem nitrosehaltige Gase in einer ersten Stufe in einer Ammoniumcarbonat-und/oder Ammoniumbicarbonatlösung unter Bildung von Ammoniumnitritlösungen absorbiert werden, das entstehende Kohlendioxid enthaltende Abgas in einer zweiten Stufe in einer ammoniakalischen wäßrigen Lösung unter Bildung von Ammoniumcarbonat und/oder Ammoniumbicarbonat absorbiert und als solches in die erste Absorptionsstufe zurückgeführt wird bzw. werden, wobei das Kohlendioxid enthaltende Abgas vor der Einbringung des Kohlendioxids in die zweite Absorptionsstufe mit einer 0,1 bis 5, bevorzugt 0,2 bis 1,5 Gew.-%, Salpetersäure enthaltende mittelkonzentrierten Schwefelsäure in Kontakt gebracht wird.

Der Kontakt des kohlendioxidhaltigen-$NO_x$-Abgases mit der salpetersäurehaltigen Schwefelsäurelösung ändert im Prinzip nur die chemische Konsistenz des Stickoxids im Abgas.

Es ist also ein wichtiges Merkmal des erfindungsgemäßen Verfahrens, daß das im Abgas enthaltene

2

EP 0 292 823 B1

Kohlendioxid auch bei geändertem Stickoxidgehalt gleichzeitig und ohne zwischengeschalteten Absorptions- und/oder Desorptionsstufen weiter verarbeitet werden kann, ohne das bestehende Prinzip der Wirkung einer Ammoniumnitritherstellung zu ändern.

Erfindungsgemäß wird also der Kohlendioxidgehalt zurückgewonnen als Ammoniumcarbonat und/oder -bicarbonat und der $NO_x$-Gehalt als Ammoniumnitrit durch Reaktion der gebildeten dreiwertigen Stickoxide mit den obengenannten Ammoniumcarbonat- und/oder -bicarbonatlösungen.

Die erfindungsgemäß eingesetzte Schwefelsäurelösung enthält Salpetersäure als Oxidationsmittel. Der Anteil an Salpetersäure in dieser Lösung liegt zwischen 0,1 und 5 Gew.-%. Er wird naturgemäß abhängig sein vom NO-Gehalt im Abgas. In der Praxis wird jedoch der Anteil zwischen 0,20 und 1,5 Gew.-% genommen.

Durch diesen geringen Gehalt an Salpetersäure wird auch der Salpetersäure-Dampfdruck in der Schwefelsäurelösung sehr niedrig gehalten, wodurch der Nitratgehalt in der neugebildeten Ammoniumcarbonatlösung vernachlässigbar ist. Dies ist eine Voraussetzung dafür, daß erfindungsgemäß eine optimale Rückgewinnung des NO-Anteils als verwertbares Ammoniumnitrit möglich wird.

Die Schwefelsäurekonzentrationen der eingesetzten Lösung können weit auseinander liegen, nämlich zwischen 5 und 96 Gew.-% $H_2SO_4$.

In der Praxis wird die Konzentration variieren zwischen 30 und 70 Gew.-%, bevorzugt zwischen 55 und 65 Gew.-% $H_2SO_4$.

Um eine nahezu vollständige Rückgewinnung des NO-Gehaltes aus dem Abgas zu gewährleisten, sollte die Schwefelsäurekonzentration so eingestellt werden, daß auch Stickoxide mit Stickstoff in der Oxidationsstufe 3 oder 4 nicht absorbiert werden.

Eine bevorzugte Ausführungsform des erfindungsgemäßen Verfahrens besteht darin, daß die mittelkonzentrierte Schwefelsäure eine Temperatur zwischen 25° C und 80° C, bevorzugt zwischen 50° C und 65° C aufweist.

Durch diese erfindungsgemäße Temperatureinstellung wird eine einfache und komplette Austreibung des oxidierten Abgases aus diesen Lösungen verwirklicht, damit keine drei- und gegebenenfalls vierwertigen Stickoxide in der mittelkonzentrierten Schwefelsäure verbleiben.

Durch die Oxidation von NO wird durch Lösen des gebildeten Reaktionswassers die Schwefelsäurekonzentration entscheidend gesenkt. Andererseits enthält das zu reinigende Abgas auch noch eine geringe Menge an Wasserdampf, der Temperatur des Abgases entsprechend. Dadurch wird auch die Schwefelsäurekonzentration gesenkt.

Diesen Umständen gemäß ist es ein wesentlicher Vorteil dieser Temperaturkontrolle, daß eine regulierbare Einstellung der gewünschten Schwefelsäurekonzentration möglich ist.

Durch eine erhöhte Temperatur wird also die Wasserbilanzierung in der Lösung und damit auch die Schwefelsäurekonzentration konstant gehalten, so daß die obengenannten Vorteile erhalten bleiben.

Im Falle eines unerwünschten Ansteigens der Konzentration wird erfindungsgemäß durch Zugabe von Wasser und/oder einer verdünnten Salpetersäurelösung die Schwefelsäurekonzentration geregelt.

Beim Unterschreiten der gewünschten Konzentration wird entsprechend höherkonzentrierte Schwefelsäure zudosiert.

Es kann auch gegebenenfalls eine verdünnte Salpetersäurelösung zudosiert werden, damit gleichzeitig die Schwefelsäurekonzentration und ebenso eine genauere Steuerung der Salpetersäurekonzentration eingestellt werden.

Insgesamt hat die kombinierte Dosierung von Salpetersäure und Schwefelsäure mehrere Vorteile. Die Mitführung von Schwefelsäure als Kreislaufflüssigkeit verhindert eine Aufkonzentrierung von Salpetersäure während der Oxidation des NO womit auch der Gehalt Ammoniumnitrat in der gebildeten ammoniumnitrithaltenden Amoniumcarbonatlösung entscheidend niedrig gehalten wird.

Außerdem kann dieser Ausführungsweise gemäß die Gesamtmenge an Salpetersäure in der Schwefelsäurelösung sehr niedrig gehalten werden, so daß keine Überoxidation von NO zu $NO_2$ auftritt.

Nachfolgend wird das erfindungsgemäße Verfahren beispielhaft erläutert, ohne daß hierin eine Einschränkung auf die Beispiele zu sehen ist.


Beispiel 1


Ein bei einer Ammoniumnitritherstellung anfallendes NO-haltiges Abgas der analytischen Zusammenstellung I wird nacheinander in Kontakt gebracht mit einer salpetersäurehaltigen Schwefelsäurelösung und einer ammoniakalischen Lösung. Beide Lösungen werden in separate Absorptionstürme gefahren. Das neugebildete Abgas weist die analytische Zusammenstellung II auf, entsprechend einem Wirkungsgrad von 96,7 %.

3

EP 0 292 823 B1

| | Abgas I | Abgas II |
|---|---|---|
| NO Vol % | 0,40 | 0,013 |
| $N_2$ " | 88,30 | 93,18 |
| $O_2$ " | 2,30 | 2,30 |
| $CO_2$ " | 5,50 | 1,2 |
| $H_2O$ " | 3,40 | 3,20 |
| $NH_3$ " | 0,10 | 0,10 |

Beispiel 2

1.405 Gewichtsteile eines NO- und Kohlendioxid-haltigem Abgas aus einer Ammoniumnitritherstellung der analytischen Zusammenstellung III wird im Gegenstrom in Kontakt gebracht mit einer Schwefelsäurelösung IV bei einer Temperatur von 65° C.

Das oxidierte Abgas wird im Gegenstrom absorbiert in 1,501 Gewichtsteilen einer 4,5 Gew.-% ammoniakalischen wäßrigen Lösung unter Bildung einer ammoniumnitrithaltigen Ammoniumcarbonatlösung V und eines gereinigten Abgases. Das resultierende Abgas weist nur 150 ppm NO auf.

**Abgas III**

NO : 4,4 Gewichtsteile
$N_2$ : 1.214 Gewichtsteile
$O_2$ : 35,2 Gewichtsteile
$CO_2$ : 118,8 Gewichtsteile
$H_2O$ : 30,8 Gewichtsteile
$NH_3$ : 22 Gewichtsteile

**Schwefelsäurelösung IV**

$H_2SO_4$: 60,8 Gew.-%
$HNO_3$ : 0,21 Gew.-%

**Ammoniumcarbonatlösung V**

$(NH_4)_2CO_3$: 10,0 Gew.-%
$NH_4NO_2$ : 0,64 Gew.-%
$NH_4NO_3$ : 0,09 Gew.-%

**Patentansprüche**

1. Verfahren zur vollständigen NO-Rückgewinnung aus dem Abgas der Ammoniumnitritherstellung, bei dem nitrosehaltige Gase in einer ersten Stufe in einer Ammoniumcarbonat- und/oder Ammoniumbicarbonatlösung unter Bildung von Ammoniumnitritlösungen absorbiert werden, das entstehende Kohlendioxid enthaltende Abgas in einer zweiten Stufe in einer ammoniakalischen wäßrigen Lösung unter Bildung von Ammoniumcarbonat und/oder Ammoniumbicarbonat absorbiert und als solches in die erste Absorptionsstufe zurückgeführt wird bzw. werden, dadurch gekennzeichnet, daß das Kohlendioxid enthaltende Abgas vor der Einbringung des Kohlendioxids in die zweite Absorptionsstufe mit einer 0,1 bis 5, bevorzugt 0,2 bis 1,5 Gew.-%, Salpetersäure enthaltenden mittelkonzentrierten Schwefelsäure in Kontakt gebracht wird.

4

2. Verfahren gemäß Anspruch 1, dadurch gekennzeichnet, daß die mittelkonzentrierte Schwefelsäure eine Konzentration zwischen 30 und 70, bevorzugt zwischen 55 und 65 Gew.-% aufweist.

3. Verfahren gemäß einem oder mehrerer der Ansprüch 1 oder 2, dadurch gekennzeichnet, daß die mittelkonzentrierte Schwefelsäure eine Temperatur zwischen 25°C und 80°C, bevorzugt zwischen 50°C und 65°C, aufweist.

4. Verfahren gemäß einem oder mehrerer der Ansprüche 1 bis 3, dadurch gekennzeichnet, daß durch Zugabe von Wasser und/oder einer verdünnten Salpetersäurelösung die Schwefelsäurekonzentration eingestellt wird.

## Claims

1. Process for complete NO recovery from the off-gas of ammonium nitrite production, in which gases containing nitrous fumes are absorbed in a first stage in an ammonium carbonate solution and/or ammonium bicarbonate solution to form solutions of ammonium nitrite, and the resulting off-gas containing carbon dioxide is absorbed in a second stage in an aqueous solution containing ammonia to form ammonium carbonate and/or ammonium bicarbonate and recycled as such into the first absorption stage, characterised in that the off-gas containing carbon dioxide is, before the carbon dioxide is introduced into the second absorption stage, contacted with a sulphuric acid of medium concentration containing 0.1 to 5 and preferably 0.2 to 1.5 % by weight of nitric acid.

2. Process according to Claim 1, characterised in that the sulphuric acid of medium concentration has a concentration of between 30 and 70, preferably between 55 and 65 % by weight.

3. Process according to one or more of Claims 1 or 2, characterised in that the sulphuric acid of medium concentration has a temperature of between 25°C and 80°C, preferably between 50°C and 65°C.

4. Process according to one or more of Claims 1 to 3, characterised in that the sulphuric acid concentration is adjusted by addition of water and/or of a dilute nitric acid solution.

## Revendications

1. Procédé pour la récupération complète de NO hors du gaz d'échappement issu de la production de nitrite d'ammonium, par lequel, dans une première étape, on absorbe les gaz nitreux dans une solution de carbonate d'ammonium et/ou de bicarbonate d'ammonium avec formation de solutions de nitrite d'ammonium ; dans une deuxième étape, on absorbe le gaz d'échappement qui se forme et qui contient du dioxyde de carbone dans une solution ammoniacale aqueuse avec formation de carbonate d'ammonium et/ou de bicarbonate d'ammonium et on le ou les achemine en retour tel(s) quel(s) à la première étape d'absorption, **caractérisé en ce que** le gaz d'échappement contenant du dioxyde de carbone est mis, avant l'incorporation du dioxyde de carbone dans la deuxième étape d'absorption, en contact avec un acide sulfurique à concentration moyenne contenant de 0,1 à 5, de préférence de 0,2 à 1,5% en poids d'acide nitrique.

2. Procédé selon la revendication 1, **caractérisé en ce que** l'acide sulfurique à concentration moyenne présente une concentration dans la plage allant de 30 à 70, de préférence de 55 à 65% en poids.

3. Procédé selon l'une ou plusieurs des revendications 1 ou 2, **caractérisé en ce que** l'acide sulfurique à concentration moyenne présente une température dans l'intervalle allant de 25°C à 80°C, de préférence de 50°C à 65°C.

4. Procédé selon l'une ou plusieurs des revendications 1 à 3, **caractérisé en ce qu'**on règle la concentration de l'acide sulfurique par addition d'eau et/ou d'une solution diluée d'acide nitrique.